Europäisches Patentamt

European Patent Office

Office européen des brevets

(11) Publication number: **0 177 198 B1**

# EUROPEAN PATENT SPECIFICATION

(45) Date of publication of patent specification: 14.08.91 (51) Int. Cl.⁵: **C01B 13/14, B01J 37/00**

(21) Application number: 85306362.6

(22) Date of filing: 06.09.85

(54) **A method for the preparation of an amorphous metal oxide composite, and amorphous metal oxide composites, including catalysts, prepared thereby.**

(30) Priority: 07.09.84 JP 188612/84

(43) Date of publication of application:
09.04.86 Bulletin 86/15

(45) Publication of the grant of the patent:
14.08.91 Bulletin 91/33

(84) Designated Contracting States:
CH DE FR GB IT LI NL

(56) References cited:
EP-A- 0 065 863
EP-A- 0 125 507
FR-A- 2 527 196
US-A- 4 281 194

(73) Proprietor: THE STATE OF JAPAN, as Repre-
sented by the DIRECTOR GENERAL of the
AGENCY of INDUSTRIAL SCIENCE and TECH-
NOLOGY
3-1, Kasumigaseki 1-chome Chiyoda-ku
Tokyo 100(JP)

(72) Inventor: Mizukami, Fujio
8-21, Kariya 5-chome Ushiku-machi
Inashiki-gun Ibaraki-ken(JP)
Inventor: Niwa, Shuichi
945, Tenjinshita Onozaki Yatabe-machi
Tsukuba-gun Ibaraki-Ken(JP)
Inventor: Tsuchiya, Tohru
409-101, Matsuhiro 4-chome Yatabe-machi
Tsukuba-gun Ibaraki-ken(JP)
Inventor: Shimizu, Kazuo
24-2, Ninomiya 1-chome Yatabe-machi
Tsukuba-gun Ibaraki-ken(JP)
Inventor: Imamura, Juichi
4-5, Kojima-cho 3-chome
Chofu-shi Tokyo-to(JP)

(74) Representative: Baverstock, Michael George
Douglas et al
BOULT, WADE & TENNANT 27 Furnival Street
London, EC4A 1PQ(GB)

# Description

The present invention relates to a method for the preparation of an amorphous metal oxide composite or, more particularly, to a method for the preparation of an amorphous metal oxide composite having high uniformity and a pore structure well controlled in a wide range starting from oxygen-containing organic metal compounds, and to amorphous metal oxide composites, including catalysts, prepared thereby.

Amorphous metal oxide composites are widely used in a variety of applications including glass materials, solid catalysts, adsorbents, sensors, opto-semiconductors, phosphors and luminescent materials, magnetic materials and the like. A large variety of synthetic methods thereof are known corresponding to the respective composite materials and intended applications thereof although the methods can be roughly classified into two classes. Namely, the first class of the synthetic methods comprises the coprecipitation of an oxide or hydroxide mixture by the addition of an acid or alkali to an aqueous solution of the inorganic salts of the desired metals. The second class of the methods comprises the hydrolysis of the alkoxides of the metals dissolved in ethyl or propyl alcohol with admixture of water to convert the alkoxides into a gel of metal oxides or metal hydroxides.

The methods belonging to the first class have several disadvantages and problems. Namely, the resultant metal oxide composite not always has a sufficiently high purity because purification of the starting metal salts is usually not a simple and easy matter and the salts used in the formation of the precipitates are sometimes adsorbed or absorbed by the precipitates as an impurity. Further no uniformity can be ensured in the precipitates and hence in the product of the metal oxide composite because the precipitation of the oxides or hydroxides takes place not rarely on the surface of the incipiently formed precipitates as the nuclei.

The methods belonging to the second class are, on the other hand, advantageous in respect of the purity of the starting materials because the metal alkoxides can easily be purified in a relatively simple process of distillation or sublimation to minimize the content of impurities. These methods are, however, nothing better than the methods of the first class in respect of the uniformity of the product of the metal oxide composite since the proceeding of the reaction for gelation is, depending on the conditions of hydrolysis, not always sufficiently smooth sometimes to form precipitates in the reaction mixture which involve the same problem as in the first class methods. This is particularly so when the hydrolysis is undertaken in a reaction mixture containing alkoxides of different metals because the hydrolyzability of metal alkoxides may differ depending on the kind of the metal. Therefore, uniform gelation of the reaction mixture without precipitation can hardly be obtained and the method is not suitable for the preparation of a sufficiently uniform gel usable as an intermediate of a high-performance material such as catalysts.

When the intended application of a metal oxide composite is as a solid catalyst, adsorbent or sensor, the consistently important factors include the specific surface area and the pore structure which can be controlled by several means proposed in the prior art such as a method in which the gel directly after hydrolysis or after drying is admixed with polyethyleneglycol, polyvinyl alcohol, polyacrylamide, cellulose ether and the like, a method in which the gel is washed with a monohydric alcohol, a method in which the gel is subjected to an acid treatment or hydrothermal treatment and a method in which the gel is calcined. These respective methods are characteristically advantageous though with disadvantages that the method is applicable only to alumina and a few other metal oxides, that the controllability of the pore structure and other parameters in the resultant metal oxide composite is limited by one of these methods alone, and that these treatments may increase the chance of introducing undesirable impurities or contaminants into the product or to uncontrollably modify the properties of the metal oxide composite. In addition to the above, a method is known for the preparation of a porous glass which is a method for the formation of a controlled pore structure in a metal oxide composite. The combination of a heat treatment and an acid treatment in this method provides a means for controlling the pore diameter in the range from 1.0 nm to several hundreds of nm. The applicability of this method is, however, very narrow and limited to a few metal oxide composites including silica and cerium (IV) oxide at least according to the available disclosure.

Alternatively, methods are known for the preparation of solid catalysts starting from metal alkoxides and various kinds of silica-supported catalysts of metals such as ruthenium, rhodium, nickel and the like are reported. The carrier oxide of these metal-supporting catalysts, however, is limited mostly to silica only although metal-supporting catalysts on a titanium dioxide carrier are known ["Shokubai", volume 24, page 58 (1982)] and no solid catalysts of satisfactorily high performance have been obtained excepting those supported on silica, presumably, due to the sole use of ethylene glycol. This is because the alkoxide of titanium or aluminum forms insoluble precipitates by reacting with ethyleneglycol naturally leading to the result that no uniformly porous metal oxide composite as desired can be obtained with such a combination.

An object of the invention is therefore to provide a novel and improved method for the preparation of a highly uniform amorphous metal oxide composite having a well controlled specific surface area and pore structure without the problems and disadvantages in the above described prior art methods.

Another object of the invention is to provide a method for the preparation of a metal-containing solid oxide catalyst in which the catalytically active metallic element is an integral component in the above mentioned amorphous metal oxide composite without the problems and disadvantages in the prior art methods.

Within the scope of the method of the present invention for the preparation of an amorphous metal oxide composite is the use of an aminoalcohol or a diol having bulkiness of molecules in a reaction mixture for the hydrolysis of the oxygen-containing organic metal compounds and the preparation of a highly uniform amorphous metal oxide composite having a controlled specific surface area and pore structure.

According to the present invention there is provided a method for the preparation of an amorphous metal oxide composite which comprises the steps of:

(a) blending at least two kinds of oxygen-containing organic metal compounds in a solvent mixture containing a polar compound selected from dihydric alcohols, aminoalcohols, ketoalcohols, diketones, ketocarboxylic acids, hydroxycarboxylic acids and dicarboxylic acids at a temperature in the range from 10 to 200°C to form a homogeneous solution;

(b) adding water to the homogeneous solution to cause cohydrolysis of the oxygen-containing organic metal compounds so that the solution is converted into a sol;

(c) keeping the sol until the sol is converted into a gelled coagulum;

(d) drying the gelled coagulum; and

(e) removing the polar compound remaining in the dried gel by evaporation.

A method for the preparation of a solid oxide catalyst containing a catalytically active metallic element as an integral component of an amorphous metal oxide composite may be performed by adding a readily reducible salt of the catalytically active metallic element into the homogeneous solution in the step (a) of the above described method so that an oxygen-containing organic compound of the metallic element is formed in situ; and, if necessary, subjecting the metal oxide composite containing the catalytically active metallic element obtained in the step (e) to a heat treatment in an atmosphere of a reducing gas.

The first step of the inventive method for the preparation of a metal oxide composite of high uniformity is the preparation of a homogeneous solution containing at least two kinds of oxygen-containing organic metal compounds (referred to merely as organic metal compounds hereinbelow) so that no reaction to form precipitates should take place between the organic metal compounds and the polar compound having multifunctionality or coordinatively crosslinking power (referred to as polar compound hereinbelow) to be contained in the mixture. The oxygen-containing organic metal compounds are preferably selected from alkoxides, ketoalcohol compounds, diketone compounds, ketocarboxylic acid compounds and hydroxycarboxylic acid compounds of metals.

When the polar compound is a dihydric alcohol it is preferably a diol compound having 14 or less carbon atoms in a molecule.

The metal forming the organic metal compound is not particularly limitative but, when the intended application of the inventive metal oxide composite is as a catalyst, at least one of the organic metal compounds is a compound, e.g. alkoxide, of silicon, boron, aluminum, titanium or zirconium as a major or base component with an expanded definition of a "metal" including the metalloid elements such as silicon and boron as combined with a second organic compound of a catalytically active metallic element as a minor component.

When the oxygen-containing organic metal compound includes at least one selected from oxygen-containing organic compounds of the boron, aluminum, silicon, titanium and zirconium the amount of said organic compound of boron, aluminum, silicon, titanium and zirconium in the oxygen-containing organic metal compound is preferably sufficient to give at least 25% by weight of an oxide of the element in the final metal oxide composition.

It should be noted that certain inorganic salts, e.g. nitrates and chlorides, can be used in place of the organic metal compound provided that the inorganic salt can be converted to an organic metal compound in situ by the reaction with the polar compound such as a dihydric alcohol. The above mentioned undesirable precipitate formation can be avoided by a proper selection of the combination of the organic metal compound and the polar compound as well as the temperature at mixing. For example, organic compounds or, in particular, alkoxides of a metal such as aluminum, titanium and zirconium sometimes form insoluble precipitates by reacting with ethylene glycol or 1,3-propanediol so that organic compounds of these metals should be combined with an aminoalcohol or a highly branched oxygen-containing compound, e.g.

dihydric secondary or tertiary alcohol, ketoalcohol or carboxylic acid and surprisingly satisfactory results could be obtained by such a combination. Like the polar compounds, proper selection of the starting material for the oxides of aluminum, titanium and zirconium is important to meet the particular intended application of the product. In some cases, soluble salts of aluminum, titanium and zirconium can be used including nitrates, sulfates, chlorides and organic salts thereof although care should be taken in respect of the poor solubility of these salts in comparison with the corresponding alkoxide compounds. On the contrary, organic compounds or, in particular, alkoxides of silicon and boron have no such a problem of precipitate formation and can be combined with almost all kinds of dihydric alcohols, aminoalcohols, ketoalcohols, ketocarboxylic acids, hydroxycarboxylic acids, dicarboxylic acids and the like. Accordingly, an oxide composite mainly composed of silicon dioxide $SiO_2$ can be prepared using a solvent system mainly composed of inexpensive ethylene glycol with admixture of a small amount of an aminoalcohol or ketoalcohol with an object to increase the uniformity of the prepared solution.

When the temperature at which the components are mixed together is too high, an undesirable reaction sometimes takes place between the polar compound and the organic metal compounds to form insoluble precipitates. The temperature of mixing should be in the range from 10 to 200 °C or, preferably, from 20 to 120 °C. When the temperature is too high, the hydroxy groups may be converted into ether linkages and the carboxyl groups are esterified to cause a great decrease in the multifunctionality and the coordinatively crosslinking power. Such an undesirable reaction of etherification or esterification can be prevented by mixing at a temperature in the range from 20 to 120 °C.

The amount of the polar compound in the mixture is also an important factor in order to compensate the decrease in the concentration thereof by the etherification and/or esterification reactions unavoidably taking place more or less and to ensure smooth proceeding of the sol formation and gelation of the mixture. The amount of the polar compound in the mixture is also important from the standpoint of obtaining a desirable pore structure and specific surface area of the resultant oxide composite. When the amount of the polar compound is too small, the gelation of the mixture cannot proceed smoothly and the reaction of hydrolysis may take an unduly long time along with eventual formation of precipitates in the mixture. When the amount of the polar compound is too large, on the other hand, the gelation of the mixture cannot proceed uniformly throughout the whole volume of the mixture sometimes to form separate masses of the gel floating in the liquid mixture and also an unduly long time is taken for the full gelation into a gelled coagulum. In this regard, the molar ratio of the amount of the polar compound in the mixture to the organic metal compounds should be in the range from 0.01 to 15 or, preferably, from 0.1 to 5.

The thus prepared mixture comprising the organic metal compounds and the polar compound is then admixed with water to effect hydrolysis of the organic metal compounds so that the mixture is converted into a sol of the hydrolysis products of the organic metal compounds. The amount of water to be added to the mixture should be in the range from 0.5 to 20 moles or, preferably, from 1 to 10 moles per mole of the organic metal compounds. When the amount of water is too small, the gelation of the mixture into a gelled coagulum cannot proceed at an adequately high velocity sometimes taking more than several days for complete gelation. When the amount of water is too large, on the other hand, the mixture cannot be gelled with sufficient uniformity.

The oxygen-containing organic metal compound used in the inventive method is not always readily hydrolyzable depending on the kind of the metal or type of the ligands. Such a difficulty can be overcome by adding a hydrolysis accelerator, such as an acid or alkali, to the mixture so that the hydrolysis and gelation of the mixture can proceed rapidly and with full uniformity. Any of soluble organic and inorganic acids and alkalis can be used for this purpose although it is a preferable condition that the acid or alkali has no possibility of remaining in the final product of the oxide composite. In this regard, preferable hydrolysis accelerators include organic acids, e.g. carboxylic acids, ketocarboxylic acids, hydroxy-carboxylic acids and the like, and organic alkalis, e.g. amines, aminoalcohols and the like, exemplified by formic acid, oxalic acid, tartaric acid, malonic acid, succinic acid, ethanolamine, propanolamine and the like.

It is not rare that the properties of a metal oxide are modified by intermixing various kinds of additives. For example, oxides of boron, silicon, aluminum, titanium and zirconium can be mixed each with one or more of the others or they are admixed with an oxide or oxides of alkali or alkaline earth metals and transition metals. Such a method of modification can also be undertaken in the inventive method using, as an additive in the hydrolysis mixture, one or more of soluble compounds of the elements belonging to the first to third series of the transition metals, lanthanide elements, actinide elements, scandium, yttrium, gallium, indium, thallium, germanium, tin, lead, phosphorus, arsenic, antimony, bismuth, sulfur, selenium, tellurium, polonium and astatine.

The above described procedure ensures smooth formation of a uniform gelled coagulum, usually, within several hours in a jelly-like or agar-like form. The thus obtained gelled coagulum is crushed and pulverized into a suitable particle size and subjected to drying at 80 to 110 °C for a few hours to 30 hours under a reduced pressure followed by a heat treatment to dissipate the polar compound remaining in the gel and to give the metal oxide composite as desired. The conditions for the heat treatment, such as the temperature and the kind of the gas in the atmosphere, should be determined according to the intended application of the metal oxide composite. The heat treatment can be performed according to any one or any combination of the procedures known in the art. For example, the atmospheric gas in the heat treatment can be hydrogen only or oxygen or air. A first heat treatment in an atmosphere of oxygen, air or an inert gas can be followed by a second heat treatment in a stream of hydrogen.

The powder X-ray diffractometry and electron microscopy are useful for the identification of the amorphousness and homogeneity of the metal oxide composite prepared in the above described procedure of the invention. Further, information on the homogeneity of the metal oxide composite of the invention can be obtained by the analyses of the IMA and ESCA methods according to which the inventive metal oxide composite has a much higher homogeneity than the similar products prepared in the conventional procedure of coprecipitation or co-blending methods. The high homogeneity of the oxide composite is an important factor which ensures the usefulness of the product not only as a catalyst but also as a sensor, opto-semiconductor and phosphor. The specific surface area and the micropore structure of the metal oxide composite can be determined by means of the surface area determination by the BET method and the determination of the pore size distribution by the pulse absorption method utilizing the absorption of methyl pentanes, n-hexane and the like. The results of these tests clearly indicated that the formulation and manner of blending of the starting mixture were actually the controlling factors of the specific surface area and the pore structure. For example, oxide composites composed of silica and alumina had a specific surface area in the range from 50 to 1000 $m^2/g$, pore diameter not exceeding 5.0 nm and pore volume in the range from 0.01 to 0.4 $cm^3/g$ depending on the kind of the polar compound used in the starting hydrolysis mixture. The above mentioned wide controllability of the parameters is a very unique advantage of the inventive method not obtained in the prior art methods for the preparation of an oxide composite containing silica and alumina.

The amorphous metal oxide composite obtained in the above described manner is characteristic in the high uniformity and useful as an adsorbent, sensor, opto-semiconductor, phosphor or luminescent material, catalyst and the like. In particular, the solid catalysts based on the amorphous metal oxide composite of the invention are quite effective when the catalyst is used for the reactions of oxidation, isomerization, cracking, hydration, hydrogenation and the like. In the preparation of a catalyst, a specific metallic element or a combination of specific metallic elements should be incorporated into the inventive metal oxide composite to serve as an active ingredient of the catalyst. Thus, the starting hydrolysis mixture comprising the organic metal compounds and the polar compound should contain one or more of soluble salts of metallic elements having catalytic activity in an amount of 0.01 to 10% by moles or, preferably, 0.1 to 5% by moles based on the overall amount of the organic metal compounds and the mixture is treated in the same manner as already described so that the resultant gelled coagulum is a uniform co-gel containing the base element, e.g. silicon, aluminum, titanium or zirconium, and the catalytically active metallic element. When the gel is heat-treated or calcined at a temperature of 200 to 1000 °C in a reducing atmosphere, the resultant metal oxide composite is a uniform composite containing the catalytically active metal to give a solid catalyst of the metal highly dispersed in the porous metal oxide composite of the invention. The catalyst can be a multi-functional catalyst having a regular distribution of the pores and useful in the reactions of isomerization, hydrogenation and cyclization and, in particular, useful as a catalyst in the reactions of petroleum refining. The metal salt having a catalytic activity should naturally be selected according to the intended application of the catalyst. Examples of the catalytically active metals include copper, silver, gold, iron, cobalt, nickel, rhodium, palladium, ruthenium, platinum, iridium, osmium, chromium, tungsten, molybdenum, manganese, rhenium and zinc. The form of the salt of these metals is not particularly limitative provided that the salt is soluble in the starting hydrolysis mixture. Alkoxides and acetylacetonates of the metals are preferred but it is optional to use a compound convertible into an oxygen-containing organic metal compound or, in particular, into an alkoxide in situ in the mixture such as chlorides and nitrates. When the metal oxide composite containing a catalytically active element is reduced by calcination in a reducing atmosphere, the gas forming the reducing atmosphere in the calcination treatment is preferably hydrogen although a gaseous mixture containing hydrogen can be used.

In the following, examples are given to illustrate the inventive method in more detail.

Example 1.

Into a beaker of 300 mℓ capacity were taken 40.1 g of hexylene glycol into which 23.7 g of aluminum sec-butoxide and 0.50 g of tetraethoxysilane were added and dissolved to form a hydrolysis mixture. The mixture was heated at 85 °C for 1 hour under agitation followed by cooling down to 70 °C. The mixture was further admixed with a solution composed of 20 g of ethylene glycol containing 0.2 g of α-hydroxy isobutyric acid and 20 g of hexylene glycol and heated at 80 °C for 3 hours. In the next place, 50 mℓ of ethyl alcohol containing 11 g of water were added to the mixture which was further agitated at the same temperature until the whole volume of the mixture was converted into an agar-like gelled coagulum. After standing overnight, the coagulum was broken into small pieces and subjected to drying at 100 °C for 24 hours under reduced pressure in an eggplant-type flask of 300 mℓ capacity mounted on a rotary evaporator to give 59.8 g of a dry solid gel. The dry gel was pulverized into a fine powder which was spread in a quartz glass tube and heated in air at 500 °C for 6 hours. The thus obtained powdery oxide composite of alumina and silica had a specific surface area of 567 $m^2/g$ and 35 times or more of pulse absorption could be repeated thereon with n-hexane.

Example 2.

Into a beaker of 300 mℓ capacity were taken 50 mℓ of tert-butyl alcohol into which 50 g of 1,2-cyclohexanediol, 48.54 g of tetraethoxysilane and 4.2 g of methyl alcohol containing 10% of hydrogen chloride were dissolved to form a mixture. The mixture was heated at 80 °C for 2 hours with agitation and then admixed with 35.6 g of dibutoxy acetoacetatoethyl aluminum with further agitation for an additional 1 hour at the same temperature. Further continued agitation of the mixture with admixture of 12 g of water resulted in the formation of an agar-like gelled coagulum which was processed in the same manner as in Example 1 to give a dry powder of an oxide composite having a specific surface area of 500 $m^2/g$ on which 13 times of pulse absorption could be repeated with 3-methylpentane.

Example 3.

Into a beaker of 300 mℓ capacity were taken 100 g of ethyl alcohol into which 10 g of cerium ammonium nitrate were dissolved and then 50 g of hexylene glycol and 19.6 g of tetraethoxysilane were added to form a mixture. The mixture was heated at 75 °C for 4 hours with agitation. Thereafter, the mixture was admixed with 30 mℓ of ethyl alcohol containing 3.7 g of water and, after further agitation for 1 hour at the same temperature, with 7.4 g of water. Still further continued agitation of the mixture at the same temperature resulted in the formation of a jelly-like gelled coagulum which was processed in the same manner as in Example 1 to give a dry powder of an oxide composite having a specific surface area of 430 $m^2/g$ on which 7 times of pulse absorption could be repeated with n-hexane.

Example 4.

Into a beaker of 300 mℓ capacity were taken 50 g of ethyl alcohol into which 25.2 g of triethyl borate, 48.6 g of tetraethoxysilane and 50.1 g of 1,2-cyclohexanediol were dissolved. The mixture was admixed with 10 mℓ of methyl alcohol containing 2 g of tartaric acid and heated at 75 °C for 3.5 hours with agitation. Thereafter, 13.5 g of water were added to the mixture which was converted into a gelled coagulum when agitation was further continued at the same temperature. The gelled mass was processed in the same manner as in Example 1 to give a dry powder of an oxide composite having a specific surface area of 673 $m^2/g$ on which 3 times and 8 times of pulse absorption could be repeated with 2,2-dimethyl butane and 3-methyl pentane, respectively.

Example 5.

Into a beaker of 200 mℓ capacity were taken 50 mℓ of ethyl alcohol into which 0.6 g of titanium ethoxide was dissolved and then 50 g of 2,3-butanediol, 69.0 g of tetraethoxysilane and 5 mℓ of methyl alcohol containing 10% of hydrogen chloride were added to form a mixture. The mixture was heated at 80 °C for 3 hours with agitation and then admixed with 30 mℓ of ethyl alcohol containing 12 g of water followed by further continued agitation for 2.5 hours at the same temperature. The mixture was further admixed with 6 g of water and agitation was continued until an agar-like gelled coagulum was formed. The gelled coagulum was processed in the same manner as in Example 1 to give a powder of an oxide composite having a specific surface area of 534 $m^2/g$ on which 7 times of pulse absorption could be repeated with 3-methyl pentane.

Example 6.

Into a beaker of 300 mℓ capacity were taken 50 mℓ of tert-butyl alcohol into which 21.4 g of titanium isopropoxide were dissolved. The solution was admixed with 50 g of hexylene glycol and 67.8 g of aluminum sec-butoxide and heated at 65 °C for 2 hours with agitation. Thereafter, the mixture was admixed with 60 mℓ of tert-butyl alcohol containing 12 g of water and agitation of the mixture was continued at the same temperature until the whole mixture was converted into a solid gel which was processed in the same manner as in Example 1 to give a powder of an oxide composite having a specific surface area of 230 m²/g on which 13 times of pulse absorption could be repeated with n-hexane.

Example 7.

Into a beaker of 300 mℓ capacity were taken 50 mℓ of ethyl alcohol into which 16.0 g of zirconium n-propoxide and 50 g of 1,2-cyclohexanediol were dissolved and then 48.7 g of tetraethoxysilane and 5 mℓ of methyl alcohol containing 10% of hydrogen chloride were added. The mixture was heated at 80 °C for 3 hours with agitation followed by dropwise addition of 10.5 g of water. When agitation of the mixture was further continued at the same temperature, the whole mixture was converted into a solid gel. This solid gel was processed in the same manner as in Example 1 to give a powder of an oxide composite having a specific surface area of 308 m²/g on which 9 times of pulse absorption could be repeated with n-hexane.

Example 8.

Into a beaker of 300 mℓ capacity were taken 50 mℓ of tert-butyl alcohol into which 8.4 g of triethyl borate were dissolved and then 73.5 g of 2,3-butanediol and 53.7 g of titanium ethoxide were added and the mixture was heated at 75 °C for 3 hours with agitation. Thereafter, the mixture was admixed with 60 mℓ of tert-butyl alcohol containing 10 g of water and agitation of the mixture was continued at the same temperature so that the mixture was converted into a solid gel which was processed in the same manner as in Example 1 to give a powder of an oxide composite having a specific surface area of 45 m²/g.

Example 9.

Into a beaker of 300 mℓ capacity were taken 30 mℓ of ethyl alcohol and 80.3 g of ethylene glycol and further 19.9 g of anhydrous aluminum chloride AlCl₃ were added and dissolved therein. The solution was further admixed with 77.7 g of tetraethoxysilane and heated at 80 °C for 3 hours with agitation. Thereafter, 70 mℓ of an aqueous ethyl alcohol containing 35 g of water were added to the solution which was kept at the same temperature for additional 1 hour so that the whole volume of the solution was converted into a gelled coagulum. The coagulum was dried in the same manner as in Example 1 into 60.1 g of a dry gel which was pulverized and calcined at 550 °C for 12 hours in air. The thus obtained powdery metal oxide composite had a specific surface area of 460 m²/g and a pore volume of 0.393 cm³/g and 31 times and 11 times of pulse absorption could be repeated thereon with n-hexane and 3-methyl pentane, respectively.

Example 10.

Into 20 mℓ of ethyl alcohol taken in a beaker of 300 mℓ capacity were added and dissolved 2.6 g of anhydrous aluminum chloride to form a solution. The solution was further admixed with 148.4 g of cyclohexanediol and 100.6 g of tetraethoxysilane and heated at 80 °C for 3 hours with agitation. Thereafter, 38 g of water were added thereto and agitation was continued overnight at the same temperature so that the whole volume of the solution was converted into an agar-like gelled coagulum which was dried in the same manner as in Example 1 into a dry gel. The thus obtained metal oxide composite had a specific surface area of 527 m²/g and a pore volume of 0.616 cm³/g and 3 times of pulse absorption could be repeated thereon with 2,2-dimethyl butane.

Example 11.

A melt of 103.8 g of pinacol contained in an eggplant-type flask of 500 mℓ capacity was admixed with 74.7 g of titanium isopropoxide and 43.6 g of aluminum sec-butoxide and the mixture was heated for 4 hours with agitation on an oil bath at 100 °C to give a clear homogeneous solution. Then, the temperature of the oil bath was increased to 120 °C and 120 mℓ of an aqueous ethyl alcohol containing 14.5 g of water were gradually added to the solution over a period of 30 minutes. After keeping the mixture for 2 hours at the same temperature, 10 g of water were added dropwise into the mixture so that the mixture was converted into a gelled coagulum after about 30 minutes. The coagulum was dried in the same manner as in Example 1 into 56.2 g of a dry powdery gel which showed absolutely no diffraction band in the powder X-ray diffraction diagram.

The powdery gel was calcined at 550 °C for 5 hours in a stream of oxygen to give a metal oxide composite having a composition of 70% $TiO_2$-$Al_2O_3$ which also showed absolutely no diffraction band in the powder X-ray diffraction diagram. When comparison is made with the powder X-ray diffraction diagrams of similar oxide composites prepared in the conventional methods after calcination in the same conditions as above clearly showing diffraction bands corresponding to the crystalline titanium dioxide, this result of X-ray diffractometry supported that the inventive oxide composite of titanium and aluminum was highly uniform and amorphous. The same conclusion could be derived also from the results of the analysis by the IMA (ion microanalyzer) method undertaken of the inventive and conventional metal oxide composites.

Example 12.

Into a beaker of 300 mℓ capacity were taken 50 mℓ of ethyl alcohol and 60 g of 2,3-butanediol and then 28.5 g of titanium tetrachloride were added and dissolved therein to form a solution. The solution was further admixed with 27.7 g of tetraethoxysilane and heated at 80 °C for 3 hours with agitation. Thereafter, 30 mℓ of an aqueous ethyl alcohol containing 12 g of water were added to the solution and agitation of the solution was continued at 80 °C so that the whole volume of the solution was converted into an agar-like gelled coagulum after about 2 hours. The coagulum was processed in the same manner as in Example 11 to give a powdery metal oxide composite having a composition of 60% $TiO_2$-$SiO_2$ which showed absolutely no diffraction band in the powder X-ray diffraction diagram indicating the high homogeneity and amorphousness of the composite. Constancy of the Ti/Si ratio obtained in the analyses by the IMA and ESCA methods also supported the high homogeneity of the composite.

Example 13.

Into 70 mℓ of ethyl alcohol taken in a beaker of 300 mℓ capacity were added and dissolved 65 g of 1,2-cyclohexanediol and then 26.5 g of zirconium tetrachloride to form a homogeneous solution. After addition of 27.7 g of tetraethoxysilane and heating at 80 °C for 3 hours with agitation, the solution was admixed with 20 mℓ of an aqueous ethyl alcohol containing 10 g of water. The whole volume of the solution was converted into an agar-like gelled coagulum after about 30 minutes. The coagulum was processed in the same manner as in Example 11 to give a powdery metal oxide composite having a composition of 70% $ZrO_2$-$SiO_2$ which showed absolutely no diffraction band in the powder X-ray diffraction diagram indicating the high homogeneity and amorphousness of the composite. Constancy of the Zr/Si ratio obtained in the analyses by the IMA and ESCA methods also supported the high homogeneity of the composite.

Example 14.

Into 68 g of ethylene glycol were added and dissolved 0.45 g of europium nitrate hexahydrate and 0.42 g of uranyl acetate dihydrate with heating at 80 °C and the solution was admixed with 68 g of tetraethoxysilane and then, after heating at 70 to 80 °C for 4.5 hours with agitation, with 18 g of water. The whole volume of the mixture was converted into an agar-like gelled coagulum after 30 to 40 minutes from the addition of water. After standing overnight at room temperature, the gelled coagulum was dried by heating at 90 to 120 °C for 24 hours under reduced pressure to give 28 g of a yellow solid gel which showed luminescence in orange under ultraviolet irradiation.

The dried gel was pulverized into a fine powder and heated at 550 °C for 4.5 hours in a stream of oxygen gas at a flow rate of 20 mℓ/minute. The thus obtained white powder was amorphous as indicated by the powder X-ray diffractometry showing no diffraction band and had a chemical composition of 2.3%($Eu_2O_3$ + $UO_3$)-$SiO_2$. The powder emitted bright yellow luminescence under irradiation of ultraviolet light.

Example 15.

A mixture composed of 84.5 g of hexylene glycol and 30 g of ethyl alcohol was admixed with 0.45 g of europium nitrate hexahydrate and 0.42 g of uranyl acetate dihydrate to be dissolved therein and then with 33.8 g of titanium isopropoxide and 34.9 g of tetraethoxysilane. After heating at 75 to 80 °C for 3 hours with agitation, the mixture was further admixed with 21 g of water so that the whole volume of the mixture was converted into an agar-like gelled coagulum within 10 to 15 minutes. The gelled coagulum was heated at 80 °C for 1 hour followed by cooling to room temperature and kept standing overnight. Thereafter, the gelled coagulum was dried by heating at 100 °C for 24 hours under reduced pressure to give 26 g of a brown solid gel which showed no luminescence under ultraviolet irradiation.

The brown gel was pulverized into a fine powder which was subjected to a calcination treatment in two different ways, on one hand, at 550 °C for 4.5 hours and, on the other hand, at 900 °C for 3 hours each in a stream of oxygen gas at a flow rate of 20 mℓ/minute to give a slightly brownish white calcined powder of an oxide composite having a chemical composition of 2.3%($Eu_2O_3$ + $UO_3$)-47.5%$TiO_2$-$SiO_2$. The powdery product obtained by the former schedule of calcination showed absolutely no diffraction band by the powder X-ray diffractometry while the product obtained by the latter schedule of calcination showed two very weak and broad diffraction bands in the X-ray diffraction diagram indicating the amorphousness of these products. The color of luminescence emitted under ultraviolet irradiation was pink and violet from the powders obtained by the calcination at 550 °C and at 900 °C, respectively.

Example 16.

Into 80 g of ethylene glycol were added and dissolved 8.3 g of magnesium nitrate hexahydrate and 6.3 g of europium nitrate hexahydrate and the solution was admixed with 6.8 g of barium oxide and heated at 100 °C for 2 hours with agitation. Thereafter, the mixture was admixed with 106 g of di-sec-butoxy acetoacetatoethyl aluminum and heated at 120 °C for 4 hours with agitation followed by cooling to 60 °C. When the mixture was admixed with 57 g of water and agitation was continued, the whole volume of the mixture was converted into an agar-like gelled coagulum within a few minutes. The gelled mass was heated at 60 °C for 2 hours followed by cooling to room temperature and kept standing overnight. Then the gelled coagulum was subjected to drying at 110 °C for 24 hours under reduced pressure to give 55 g of a dry yellow gel which emitted pale blue luminescence under ultraviolet irradiation.

The dry gel was pulverized into a fine powder which was calcined at 600 °C for 3 hours in a stream of oxygen gas at a flow rate of 20 mℓ/minute to give a white powder. This powdery product showed reddish orange, bright luminescence under ultraviolet irradiation and had a chemical composition of $1.3MgO \cdot 1.5BaO \cdot 7Al_2O_3 \cdot 0.1Eu_2O_3$. The oxide composite was amorphous as was indicated by the powder X-ray diffractometry which gave only a very broad and weak diffraction band in the X-ray diffraction diagram.

Example 17.

Into 15 g of ethyl alcohol was dissolved 0.42 g of uranyl acetate dihydrate and then were added 51 g of ethylene glycol and 68.4 g of tetraethoxysilane and the mixture was heated at 75 °C for 3 hours with agitation. Thereafter, the mixture was admixed with 1 mℓ of acetic acid and further, after heating at 85 °C for 3 hours with agitation, with 24 g of water so that the whole volume of the mixture was converted into an agar-like gelled coagulum within 30 minutes. After standing overnight at room temperature, the gelled coagulum was subjected to drying at 110 °C for 10 hours under reduced pressure to give 27 g of a light yellow solid gel which showed almost no luminescence under ultraviolet irradiation.

The thus dried gel was pulverized into a fine powder and calcined at 550 °C for 4.5 hours in a stream of oxygen gas at a flow rate of 20 mℓ/minute to give a white powdery product which had a chemical composition of $1.43\%UO_3 \text{-} SiO_2$, and showed no diffraction band in the X-ray diffraction diagram indicating amorphousness. This white powder emitted bright, yellowish green luminescence under ultraviolet irradiation.

Example 18.

Into 50 g of ethyl alcohol were dissolved 22 g of dysprosium nitrate hexahydrate and then were added 17 g of ethylene glycol and 25.2 g of di-sec-butoxy acetoacetatoethyl aluminum and the mixture was heated for 5 hours with agitation on an oil bath kept at 120 °C. Thereafter, the temperature of the oil bath was decreased to 100 °C and the mixture was admixed with 12 g of water and 2 g of acetic acid and heated for additional 5 hours. The thus obtained viscous solution was concentrated by evaporation at 100 °C under reduced pressure into a jelly-like solid and then dried at 120 °C under reduced pressure to give 22 g of a brown solid gel.

The thus obtained dry gel was pulverized into a fine powder and calcined at 600 °C for 6 hours in a stream of oxygen gas at a flow rate of 20 mℓ/minute into a greyish black powder which had a chemical composition of $3Dy_2O_3 \cdot 5Al_2O_3$ and showed absolutely no diffraction band in the X-ray diffraction diagram indicating amorphousness. This greyish black powder was ferromagnetic as was indicated by the attraction of the powder to a permanent magnet brought toward the powder.

Example 19.

Into a mixture composed of 25.5 g of ethylene glycol and 25.5 g of ethyl alcohol were added and dissolved 18.5 g of yttrium nitrate hexahydrate and 0.76 g of terbium nitrate and the solution was admixed with 25.6 g of di-sec-butoxy acetoacetatoethyl aluminum and heated at 110 °C for 3 hours with agitation followed by cooling to 100 °C. The mixture was further admixed with 15 g of water and heated at 100 °C for 5 hours with agitation followed by cooling to 90 °C. Then, the mixture was admixed with 37 g of tetraethoxysilane and 10 g of water with agitation so that the whole volume of the mixture was converted into an agar-like gelled coagulum within about 1 hour. The gelled coagulum was subjected to drying by heating at 110 °C for 24 hours under reduced pressure to give 28 g of a light brown, solid gel which showed no luminescence under ultraviolet irradiation.

The thus dried gel was pulverized into a fine powder and calcined at 600 °C for 8 hours in a stream of air at a flow rate of 100 mℓ/minute to give a greyish white powder which was amorphous as indicated by the absence of any diffraction band in the X-ray diffraction diagram and emitted bright, yellowish green luminescence under ultraviolet irradiation.

Example 20.

Into 80 g of ethyl alcohol taken in a beaker of 300 mℓ capacity were dissolved 0.488 g of dichloro bis(acetonetolyl) palladium and 7.16 g of phosphomolybdic acid hydrate and then 50 g of 1,2-cyclohexanediol and the mixture was heated at 70 °C for 30 minutes to give a clear solution. This solution was admixed with 45.25 g of tetraethoxysilane and the mixture was heated at 60 °C for 3 hours followed by 4 times of portionwise addition of 8 g of water in each time at 1 hour intervals. The whole volume of the mixture was converted into an agar-like gelled coagulum after about 6 hours from the start of the addition of water. The weight of the gelled coagulum was 45.5 g after drying. Calcination of the dried gel in air at 550 °C for 6 hours gave 25.2 g of a powdery oxide composite having a specific surface area of 253 m²/g and the powder had a chemical composition of 0.8% Pd-27% $P_2O_5 \cdot 24MoO_3$-Sio$_2$.

Example 21.

Into 80 g of ethylene glycol taken in a beaker of 300 mℓ capacity were dissolved 3 g of ruthenium trichloride and the solution was admixed with 91.0 g of tetraethoxysilane and 23.6 g of triethyl borate followed by heating at 70 °C for 3 hours with agitation. Thereafter, the mixture was admixed with 12 g of water and further, after heating for 1 hour at the same temperature, with 12 g of water. When agitation was continued at the same temperature, the mixture was converted into a solid gel which was dried in a rotary evaporator and pulverized in the same manner as in Example 1. The pulverized gel was spread in a quartz glass tube and heated at 400 °C for 8 hours in a stream of hydrogen gas to give a powder of an oxide composite of the composition 3.5% Ru-B$_2$O$_3$-SiO$_2$. It was concluded that the thus obtained powdery product was homogeneous and amorphous containing metallic ruthenium in a highly dispersed state with a particle size of 2.0 nm or smaller from the results of the powder X-ray diffractometry showing no diffraction band and the electron microscopy showing absence of metallic particles while the content of ruthenium could be determined by the elementary analysis.

Example 22.

Into a beaker of 300 mℓ capacity were introduced 59.5 g of tetraethoxysilane and 10.3 g of aluminum sec-butoxide and the mixture was heated at 75 °C for 1 hour to form a uniform solution. The solution was admixed with 50 g of hexylene glycol and then with 25 mℓ of ethyl alcohol containing 1.5 g of nickel chloride dissolved therein and the mixture was heated at 70 °C for 3 hours followed by admixture of 60 mℓ of ethyl alcohol containing 8 g of water. When agitation of the mixture was continued at the same temperature, the whole volume of the mixture was converted into a solid gel which was processed in the same manner as in Example 9 except that the temperature at the heat treatment in the hydrogen stream was 500 °C instead of 400 °C to give a powdery product. The powder X-ray diffractometry and the electron microscopy of the powder led to a conclusion that the thus obtained oxide composite was amorphous and very homogeneous bearing metallic nickel in a highly dispersed state with 2.0 nm or smaller of the particle size.

Example 23.

A solution was prepared by dissolving 0.45 g of ruthenium trichloride hydrate and 0.054 g of copper(II) chloride dihydrate and then 2.77 g of magnesium nitrate hexahydrate in 20 mℓ of ethyl alcohol. The solution was then admixed with 50 g of pinacol to give a homogeneous mixture with heating and further admixed with 93.5 g of aluminum sec-butoxide. The mixture was heated at 60 °C for 3 hours with agitation. Thereafter, 100 mℓ of an aqueous ethyl alcohol containing 5.3 g of water and, after agitation at 60 °C for 1 hour, further 50 mℓ of another aqueous ethyl alcohol containing 5.3 g of water were added successively to the mixture so that the whole volume thereof was converted after a while into a gelled coagulum. The coagulum was processed in the same manner as in Example 21 into a powdery metal oxide composite having a composition of 1% Ru-0.1% Cu-2.2% MgO-Al$_2$O$_3$. The high homogeneity of this composite was evidenced by the results obtained in the powder X-ray diffractometry, electron microscopy and IMA analysis.

## Claims

1. A method for the preparation of an amorphous metal oxide composite which comprises the steps of:
    (a) blending at least two kinds of oxygen-containing organic metal compounds in a solvent mixture containing a polar compound selected from dihydric alcohols, aminoalcohols, ketoalcohols, diketones, ketocarboxylic acids, hydroxycarboxylic acids and dicarboxylic acids at a temperature in the range from 10 to 200°C to form a homogeneous solution;

(b) adding water to the homogeneous solution to cause cohydrolysis of the oxygen-containing organic metal compounds so that the solution is converted into a sol;

(c) keeping the sol until the sol is converted into a gelled coagulum;

(d) drying the gelled coagulum; and

(e) removing the polar compound remaining in the dried gel by evaporation.

2. A method as claimed in claim 1 wherein the oxygen-containing organic metal compounds are selected from alkoxides, ketoalcohol compounds, diketone compounds, ketocarboxylic acid compounds and hydroxycarboxylic acid compounds of metals.

3. A method as claimed in claim 2 wherein the oxygen-containing organic metal compounds are formed in situ in the solvent mixture from inorganic salts of metals by reaction with the suitable polar compound.

4. A method as claimed in any one of the preceding claims wherein the oxygen-containing organic metal compounds include at least one selected from oxygen-containing organic compounds of boron, aluminum, silicon, titanium, and zirconium.

5. A method as claimed in claim 4 wherein the amount of the organic compound of boron, aluminum, silicon, titanium or zirconium in the oxygen-containing organic metal compounds is sufficient to give at least 25% by weight of an oxide of the element in the final metal oxide composite.

6. A method as claimed in any one of the preceding claims wherein the dihydric alcohol is a diol compound having 14 or less carbon atoms in a molecule.

7. A method as claimed in any one of the preceding claims wherein the molar ratio of the amounts of the polar compound to the oxygen-containing metal organic compounds is in the range from 0.01 to 15.

8. A method as claimed in claim 7 wherein the molar ratio is in the range from 0.1 to 5.

9. A method as claimed in any one of the preceding claims wherein the temperature in the step (a) is in the range from 20 to 120°C.

10. A method as claimed in any one of the preceding claims wherein the amount of water added in the step (b) is in the range from 0.5 to 20 moles per mole of the oxygen-containing organic metal compounds.

11. A method as claimed in claim 10 wherein the amount of water is in the range from 1 to 10 moles.

12. A method as claimed in claim 1, for the preparation of a porous, high-dispersed catalyst containing a catalytically active metallic element as an integral compound of an amorphous metal oxide composite, performed by adding in step (a) of claim 1 a readily reducible metal salt to the polar compound and by calcining the gel, after drying, in a reducing atmosphere to reduce the readily reducible metal salt into a metallic form.

13. A method as claimed in claim 12 wherein the readily reducible metal salt is a salt of a metal selected from copper, silver, gold, iron, cobalt, nickel, rhodium, palladium, ruthenium, platinum, iridium, osmium, chromium, tungsten, molybdenum, manganese, rhenium and zinc.

14. A method as claimed in claim 12 or claim 13 wherein the amount of the readily reducible metal salt is in the range from 0.01 to 10% by moles based on the amount of the oxygen-containing organic metal compounds.

15. A method as claimed in any one of claims 12 to 14 wherein the temperature in the step (e) is in the range from 200 to 1000°C.

16. A method as claimed in any one of claims 12 to 15 wherein the reducing atmosphere is an atmosphere of hydrogen gas or a hydrogen-containing gaseous mixture.

## Revendications

1. Procédé de préparation d'un composite amorphe d'oxyde de métal qui comprend les étapes de :

(a) mélanger au moins deux sortes de composés organiques de métal contenant de l'oxygène dans un mélange solvant contenant un composé polaire choisi parmi des alcools dihydriques, des aminoalcools, des cétoalcools, des dicétones, des acides cétocarboxyliques, des acides hydroxycarboxyliques et des acides dicarboxyliques à une température comprise entre 10 et 200°C pour former une solution homogène ;

(b) ajouter de l'eau à la solution homogène pour provoquer une co-hydrolyse des composés organiques de métal contenant de l'oxygène de manière que la solution se convertisse en un sol ;

(c) maintenir le sol jusqu'à ce que le sol se convertisse en un coagulum gélifié ;

(d) sécher le coagulum gélifié ; et

(e) enlever le composé polaire restant dans le gel séché par évaporation.

2. Prccédé selon la revendication 1 où les composés organiques de métal contenant de l'oxygène sont choisis parmi des alcoolates, composés de cétoalcool, composés de dicétone, composés d'acide cétocarboxylique et composés d'acide hydroxycarboxylique de métaux.

3. Procédé selon la revendication 2 où les composés organiques de métal contenant de l'oxygène sont formés in situ dans le mélange solvant de sels inorganiques de métaux par réaction avec le composé polaire approprié.

4. Procédé selon l,une quelconque des revendications précédentes où les composés organiques de métal contenant de l'oxygène comprennent au moins un choisi parmi des composés organiques contenant de l'oxygène de bore, aluminium, silicium, titane et zirconium.

5. Procédé selon la revendication 4 où la quantité du composé organique de bore, aluminium, silicium, titane ou zirconium dans les composés organiques de métal contenant de l'oxygène est suffisante pour donner au moins 25% en poids d'un oxyde de l'élément dans le composite d'oxyde de métal final.

6. Procédé selon l'une quelconque des revendications précédentes où l'alcool dihydrique est un composé diol ayant 14 atomes de carbone ou moins dans une molécule.

7. Procédé selon l'une quelconque des revendications précédentes où le rapport molaire des quantités du composé polaire au composés organiques de métal contenant de l'oxygène est compris entre 0,01 et 15.

8. Procédé selon la revendication 7 où le rapport molaire est compris entre 0,1 et 5.

9. Procédé selon l'une quelconque des revendications précédentes où la température de l'étape (a) est comprise entre 20 et 120°C.

10. Procédé selon l'une quelconque des revendications précédentes où la quantité d'eau ajoutée à l'étape (b) est comprise entre 0,5 et 20 moles par mole des composés organiques de métal contenant de l'oxygène.

11. Procédé selon la revendication 10 où la quantité d'eau est comprise entre 1 et 10 moles.

12. Procédé selon la revendication 1,pour la préparation d'un catalyseur poreux, très dispersé, contenant un élément métallique catalytiquement actif en tant que composé intégral d'un composite d'oxyde de métal amorphe, accomplie par addition, à l'étape (a) de la revendication 1,d'un sel de métal facilement réductible , au composé polaire et par calcination du gel, après séchage, dans une atmosphère réductrice pour réduire le sel de métal facilement réductible en une forme métallique.

13. Procédé selon la revendication 12 où le sel de métal facilement réductible est un sel d'un métal choisi parmi le cuivre, l'argent, l'or, le fer, le cobalt, le nickel, le rhodium, le palladium, le ruthénium, le platine, l'iridium, l'osmium, le chrome, le tungstène, le molybdène, le manganèse, le rhénium et le zinc.

14. Procédé selon la revendication 12 ou la revendication 13 où la quantité du sel de métal facilement réductible est comprise entre 0,01 et 10% en moles en se basant sur la quantité des composés organiques de métal contenant de l'oxygène.

15. Procédé selon l'une quelconque des revendications 12 à 14 où la température à l'étape (e) est comprise entre 200 et 1000°C.

16. Procédé selon l'une quelconque des revendications 12 à 15 où l'atmosphère réductrice est une atmosphère d'hydrogène gazeux ou d'un mélange gazeux contenant de l'hydrogène.

**Patentansprüche**

1. Verfahren zur Herstellung eines amorphen Metalloxidgemisches, das die Schritte aufweist:

(a) Vermischen wenigstens zweier Arten von sauerstoffhaltigen organischen Metallverbindungen in einer Lösungsmittelmischung, die eine unter dihydrischen Alkoholen, Aminoalkoholen, Ketoalkoholen, Diketonen, Ketocarbonsäuren, Hydroxycarbonsäuren und Dicarbonsäuren gewählte polare Verbindung enthält, bei einer Temperatur im Bereich von 10 bis 200 °C zur Bildung einer homogenen Lösung;

(b) Zusetzen von Wasser zur homogenen Lösung zwecks Bewirkung einer Cohydrolyse der sauerstoffhaltigen organischen Metallverbindungen, so daß die Lösung in ein Sol umgewandelt wird;

(c) Halten des Sols, bis das Sol in ein geliertes Koagulat umgewandelt wird;

(d) Trocknen des gelierten Koagulats; und

(e) Entfernen der im getrockneten Gel übrigbleibenden polaren Verbindung durch Verdampfung.

2. Verfahren nach Anspruch 1, wobei die sauerstoffhaltigen organischen Metallverbindungen unter Alkoxiden, Ketoalkoholverbindungen, Diketonverbindungen, Ketocarbonsäureverbindungen und Hydroxycarbonsäureverbindungen von Metallen gewählt werden.

3. Verfahren nach Anspruch 2, wobei die sauerstoffhaltigen organischen Metallverbindungen in situ aus anorganischen Metallsalzen durch Reaktion mit der geeigneten polaren Verbindung gebildet werden.

4. Verfahren nach irgendeinem der vorstehenden Ansprüche, wobei die sauerstoffhaltigen organischen Metallverbindungen wenigstens eine unter sauerstoffhaltigen organischen Verbindungen von Bor, Aluminium, Silizium, Titan und Zirkonium gewählte enthalten.

5. Verfahren nach Anspruch 4, wobei die Menge der organischen Bor-, Aluminium-, Silizium-, Titan- oder Zirkoniumverbindung in den sauerstoffhaltigen organischen Metallverbindungen ausreichend ist, um wenigstens 25 Gew.% eines Oxids des Elements im endgültigen Metalloxidgemisch zu ergeben.

6. Verfahren nach irgendeinem der vorstehenden Ansprüche, wobei der dihydrische Alkohol eine Diolverbindung mit 14 oder weniger Kohlenstoffatomen in einem Molekül ist.

7. Verfahren nach irgendeinem der vorstehenden Ansprüche, wobei das Molverhältnis der Mengen der polaren Verbindung zu den sauerstoffhaltigen organischen Metallverbindungen im Bereich von 0,01 bis 15 ist.

8. Verfahren nach Anspruch 7, wobei das Molverhältnis im Bereich von 0,1 bis 5 ist.

9. Verfahren nach irgendeinem der vorstehenden Ansprüche, wobei die Temperatur im Schritt (a) im Bereich von 20 bis 120 °C ist.

10. Verfahren nach irgendeinem der vorstehenden Ansprüche, wobei die im Schritt (b) zugesetzte Wassermenge im Bereich von 0,5 bis 20 Molen je Mol der sauerstoffhaltigen organischen Metallverbindungen ist.

11. Verfahren nach Anspruch 10, wobei die Wassermenge im Bereich von 1 bis 10 Molen ist.

12. Verfahren nach Anspruch 1 zur Herstellung eines porösen, hoch-dispersen, ein katalytisch aktives Metallelement als integrale Verbindung eines amorphen Metalloxidgemisches enthaltenden Katalysators,

das durchgeführt wird, indem man im Schritt (a) des Anspruchs 1 der polaren Verbindung ein leicht reduzierbares Metallsalz zusetzt und das Gel, nach dem Trocknen, in einer reduzierenden Atmosphäre zur Reduktion des leicht reduzierbaren Metallsalzes in eine metallische Form calciniert.

13. Verfahren nach Anspruch 12, wobei das leicht reduzierbare Metallsalz ein Salz eines unter Kupfer, Silber, Gold, Eisen, Kobalt, Nickel, Rhodium, Palladium, Ruthenium, Platin, Iridium, Osmium, Chrom, Wolfram, Molybdän, Mangan, Rhenium und Zink gewählten Metalls ist.

14. Verfahren nach Anspruch 12 oder 13, wobei die Menge des leicht reduzierbaren Metallsalzes im Bereich von 0,01 bis 10 Mol % auf Basis der Menge der sauerstoffhaltigen organischen Metallverbindungen ist.

15. Verfahren nach irgendeinem der Ansprüche 12 bis 14, wobei die Temperatur im Schritt (e) im Bereich von 200 bis 1000 °C ist.

16. Verfahren nach irgendeinem der Ansprüche 12 bis 15, wobei die reduzierende Atmosphäre eine Atmosphäre aus Wasserstoffgas oder einer wasserstoffhaltigen Gasmischung ist.